# EUROPÄISCHE PATENTANMELDUNG

(11) **EP 3 434 478 A1**
(43) Veröffentlichungstag der Anmeldung: **30.01.2019**
(21) Anmeldenummer: 17183826.1
(22) Anmeldetag: 28.07.2017
(51) Int. Cl.: B32B 37/12, B32B 5/24, B32B 27/12

(54) **VERFAHREN ZUR HERSTELLUNG VON ZUMINDEST ZWEILAGIGEN PLATTEN DURCH VERKLEBEN AUS MINDESTENS EINER AUSGANGSPLATTE AUS EINEM ANORGANISCHEN ISOLATIONSMATERIAL**

(71) Anmelder: BASF SE, 67056 Ludwigshafen am Rhein (DE)
(72) Erfinder: HENN, Rolf, 67056 Ludwigshafen (DE); SCHERZER, Dietrich, 67056 Ludwigshafen (DE); AHMADNIAN, Fatemeh, 67056 Ludwigshafen (DE); DIETZEN, Franz-Josef, 67056 Ludwigshafen (DE)
(74) Vertreter: Ellwanger, Arndt

(57) **Zusammenfassung**

Die vorliegende Erfindung betrifft ein Verfahren zur Herstellung einer zumindest zweilagigen Platte durch Verkleben von mindestens einer dünneren thermoplastischen Schaumstoffplatte (TS) und mindestens einer dünneren Platte (IM) als Ausgangsplatten. Die mindestens eine dünnere Platte (IM) ist aus einem anorganischen Isolationsmaterial hergestellt und der Klebstoff, mit dem die dünnere thermoplastische Schaumstoffplatte (TS) und die dünnere Platte (IM) miteinander verklebt werden, enthält mindestens eine anorganische Komponente. Weiterhin betrifft die vorliegende Erfindung die zumindest zweilagige Platte als solche sowie deren Verwendung als Brandschutz für die Außenfassade eines Bauwerks. Darüber hinaus betrifft sie auch die Außenwand (AW), auf die die zumindest zweilagige Platte aufgebracht ist.

## Beschreibung

Die vorliegende Erfindung betrifft ein Verfahren zur Herstellung einer zumindest zweilagigen Platte durch Verkleben von mindestens einer dünneren thermoplastischen Schaumstoffplatte (TS) und mindestens einer dünneren Platte (IM) als Ausgangsplatten. Die mindestens eine dünnere Platte (IM) ist aus einem anorganischen Isolationsmaterial hergestellt und der Klebstoff, mit dem die dünnere thermoplastische Schaumstoffplatte (TS) und die dünnere Platte (IM) miteinander verklebt werden, enthält mindestens eine anorganische Komponente. Weiterhin betrifft die vorliegende Erfindung die zumindest zweilagige Platte als solche sowie deren Verwendung als Brandschutz für die Außenfassade eines Bauwerks. Darüber hinaus betrifft sie auch die Außenwand (AW), auf die die zumindest zweilagige Platte aufgebracht ist.

Die Anzahl der Lagen der zumindest zweilagigen Platte als solche ergibt sich aus der Anzahl der dünneren Platten (IM) und (TS), die miteinander verklebt werden. Wenn beispielsweise drei dünnere Ausgangsplatten (IM) und (TS) miteinander verklebt werden, wird eine dreilagige Platte als solche erhalten.

DE-A 44 21 016 offenbart ein Verfahren zur Herstellung von CO₂-geschäumten Kunststoffplatten großer Dicke, insbesondere aus Polystyrol und/oder Polyethylen, wobei eine Doppelung der entsprechenden Ausgangsplatten durch thermisches Verschweißen erfolgt. Das thermische Verschweißen wird mit Hilfe eines Heizschwertes durchgeführt, wodurch die Oberflächen der eingesetzten Kunststoffschaumplatten angeschmolzen werden. Die zu verschweißenden Ausgangsplatten werden über das Heizschwert gezogen, wobei es zu einem direkten Kontakt von Heizschwert und Ausgangsplatten kommt. Das vorzugsweise mit einer Teflonschicht versehene Heizschwert kann elektrisch oder mit einem durchfließenden Heizmedium auf die notwendige Schweißtemperatur gebracht werden, die je nach Kunststoffschaum zwischen 100 und 150 °C beträgt.

Thermische Dämmstoffe aus XPS-Kompositmaterialien, die dreilagig sind, werden in WO 2012/016991 beschrieben. Die Dreilagigkeit der Kompositmaterialien ergibt sich dadurch, dass eine untere, eine zentrale und eine obere XPS-Platte zu dem XPS-Kompositmaterial vereinigt werden, wobei jede nach außen gerichtete Seite dieses XPS-Kompositmaterials eine Extrusionshaut umfasst. Während die Kontaktseiten der zentralen XPS-Platte ebenfalls eine Extrusionshaut aufweisen, wird diese bei den entsprechenden Kontaktseiten der oberen sowie unteren XPS-Platte entfernt. Die einzelnen XPS-Platten werden zum XPS-Kompositmaterial durch thermisches Verschweißen an den Kontaktflächen zusammengefügt. Das thermische Verschweißen wird bevorzugt unter Verwendung eines Heizschwertes sowie mit direktem Kontakt vom Heizschwert mit den zu verschweißenden XPS-Platten durch Bewegung der XPS-Platten über ein starr angeordnetes Heizschwert durchgeführt. Die zwischen den einzelnen XPS-Platten ausgebildete Schweißnaht kann Teilbereiche von unterschiedlicher Intensität aufweisen, was bedeutet, dass die entsprechende Schweißnaht an einigen Stellen stärker, an anderen Stellen hingegen schwächer ausgebildet ist.

DE-A 10 2012 204 822 betrifft ein Verfahren zum dauerhaften flächigen Verbinden von zwei Werkstoffplatten von zwei aufgeschäumten Materialien. Eine erste und eine zweite Werkstoffplatte werden jeweils mit einer Fördereinrichtung in der gewünschten Orientierung und Deckung passgenau übereinander positioniert, einer Schweißstation zugeführt und dort entlang eines Trennschwertes bewegt. Durch die Positionierung des Trennschwertes zwischen den einander zugewandten Oberflächen der beiden Werkstoffplatten wird ein Spalt mit definierter Spaltbreite erzeugt. Durch ein sich im Spaltstrom abwärts zum Trennschwert befindendes fest installiertes Wärmeelement, vorzugsweise ein Heizschwert, werden durch berührungsfreie Wärmeübertragung die einander zugewandten Oberflächen der beiden Werkstoffplatten mit Wärme beaufschlagt, so dass mindestens eine dieser Oberflächen erweicht wird oder anschmilzt. Anschließend werden die beiden Werkstoffplatten durch Andrückelemente zusammengefügt, die die beiden Werkstoffplatten derart gegeneinander drücken, dass deren einander zugewandte Oberflächen aufgrund der vorangegangenen Wärmebeaufschlagung durch das Wärmeelement stoffschlüssig miteinander verbunden werden.

WO 2015/011016 betrifft ein Verfahren zur Herstellung von zumindest zweilagigen thermoplastischen Schaumstoffplatten durch thermisches Verschweißen von mindestens zwei dünneren thermoplastischen Schaumstoffplatten. Bei diesem Verfahren werden mindestens zwei Heizelemente auf zueinander versetzten Ebenen zwischen die zu verschweißenden Oberflächen der dünneren thermoplastischen Schaumstoffplatten geführt, wobei sich die Schaumstoffplatten und die Heizelemente nicht gegenseitig berühren. Dabei werden entweder zwei Heizelemente aus jeweils zueinander entgegengesetzten Richtungen in den Zwischenraum zwischen die beiden Ausgangsplatten eingeführt und/oder die zwei Heizelemente werden in jeweils zueinander entgegengesetzten Richtungen aus diesem Zwischenraum wieder entfernt.

EP-A 1 201 838 betrifft eine Dämmplatte für die Wärmeisolierung von Gebäudefassaden. Die zumindest zweischichtige Dämmplatte weist eine erste relativ dünne Materialschicht aus expandiertem Polystyrol auf, wobei im Fall einer dreischichtigen Dämmplatte auch die dritte Schicht der ersten Schicht entspricht, die folglich als Außenflächen der Dämmplatte verwendet werden. Die zweite Schicht der Dämmplatte hat hingegen eine Dicke, die einem Vielfachen der Dicke der ersten und gegebenenfalls der dritten Schicht entspricht, wobei die zweite Schicht aus einem Polyurethanschaum besteht. Die jeweiligen Dämmplatten werden aus den entsprechenden Ausgangsplatten beim Herstellungsprozess in situ miteinander verbunden, wobei die auf das Polyurethan basierende Schicht gleichzeitig als Klebeschicht fungiert. Ein Verkleben oder insbesondere Verschweißen von bereits fertigen Ausgangsplatten ist in EP-A 1 201 838 ebenfalls nicht beschrieben.

CH-A 706 454 betrifft eine Dämmplatte und ein Verfahren zur Herstellung einer Dämmplatte. Die Dämmplatte wird zur Wärmeisolation von Außenfassaden, Wänden oder anderen Teilen von Gebäuden verwendet und basiert auf expandiertem Polystyrol (EPS). Die Dämmplatte kann mehrteilig sein und umfasst eine EPS-Hauptplatte und zumindest eine Deckplatte, die auf der Vorder- oder Rückseite der Hauptplatte angeordnet ist. Die Hauptplatte ist in Folge athermaner Bestandteile, insbesondere Graphitpartikel, dunkel gefärbt, während die entsprechende Deckplatte, die ebenfalls auf EPS basiert, hell bis weiß erscheint, was durch die Zugabe anderer atherman wirkender Stoffe, insbesondere Titandioxid, erzielt wird. Die einzelnen Ausgangsplatten der Dämmplatte können auf beliebige Weise miteinander verbunden werden, beispielsweise durch thermisches Verschweißen, durch Quellschweißen (unter Verwendung eines Lösungsmittels) oder unter Verwendung eines Klebstoffs. In CH-A 706 454 wird jedoch nicht offenbart, dass außer auf expandiertem Polystyrol (EPS) basierten Ausgangsplatten auch andere Ausgangsplatten verwendet werden können.

EP-B 2 665 876 betrifft eine isolierte Gebäudewand umfassend ein Wärmedämmverbundsystem und eine Gebäudeaußenwand, wobei das Wärmedämmverbundsystem an der bauwerksfernen Seite der Gebäudewand angebracht ist. Das Wärmeverbundsystem umfasst eine zumindest zweilagige Wärmedämmschicht, wobei mindestens zwei Lagen dieser Wärmedämmschicht jeweils ein Aerogel und anorganische Fasern sowie gegebenenfalls anorganische Füllstoffe enthalten. Die einzelnen Lagen der Wärmedämmschicht sind mit einem anorganischen Bindemittel, wie Kaliumwasserglas oder Zement, miteinander verbunden und das Wärmedämmverbundsystem weist einen Brennwert von weniger als 3 MJ pro kg auf. Bei dem Aerogel kann es sich um anorganische Aerogele auf der Basis von Siliciumoxiden (Silicaten) handeln.

EP 16 182 632.6 betrifft ein Verfahren zur Herstellung von zumindest zweilagigen Platten durch Verbinden von mindestens einer dünneren thermoplastischen Schaumstoffplatte und mindestens einer dünneren Platte als Ausgangsplatten. Die dünnere Platte ist dabei aus einem Material hergestellt, das einen mittleren Zelldurchmesser ≤ 1000 nm aufweist, vorzugsweise aus mindestens einem Aerogel und/oder Xerogel. Die zumindest zweilagigen Platten eignen sich zur Verwendung als Wärmedämmstoff.

WO 2012/098040 betrifft ein Kompositmaterial zur thermischen Dämmung, das aus mindestens zwei Schichten besteht, die ein Aerogel, anorganische Fasern und anorganische Füllstoffe enthalten. Die Schichten sind mittels eines anorganischen Bindemittels miteinander verbunden.

WO 2010/046074 betrifft ein Kompositsystem für die thermische Außendämmung, wobei das Kompositsystem in einer Ausführungsform ein Teilsystem enthält, das aus einer ersten Schicht aus einem Aerogel und aus einer zweiten Schicht aus Mineralwolle aufgebaut ist. Das Kompositsystem wird mittels mechanischer Befestigungsmittel mit der Außenwand eines Gebäudes verbunden.

Im Stand der Technik ist somit nirgendwo offenbart, dass auch zumindest zweilagige Platten durch Verkleben einer dünneren thermoplastischen Schaumstoffplatte und einer dünneren Platte hergestellt werden können, wobei die dünnere Platte aus einem anorganischen Isolationsmaterial hergestellt ist und wobei der dabei verwendete Klebstoff mindestens eine anorganische Komponente enthält..

Die der vorliegenden Erfindung zugrunde liegende Aufgabe besteht in der Bereitstellung eines neuen Verfahrens zur Herstellung von mindestens zweilagigen Platten bzw. in den zumindest zweilagigen Platten als solchen, wobei diese Platten sich durch niedrige Wärmeleitfähigkeit und gute Verarbeitbarkeit auszeichnen sollen. Außerdem sollen die zumindest zweilagigen Platten vorteilhafte Eigenschaften im Zusammenhang mit einer verringerten Brennbarkeit sowie dem Erfüllen von Brandtests aufweisen.

Gelöst wird die Aufgabe durch ein Verfahren zur Herstellung einer zumindest zweilagigen Platte durch Verkleben von mindestens einer dünneren thermoplastischen Schaumstoffplatte (TS) und mindestens einer dünneren Platte (IM), wobei die mindestens eine dünnere Platte (IM) aus einem anorganischen Isolationsmaterial hergestellt ist und wobei der Klebstoff, mit dem die dünnere thermoplastische Schaumstoffplatte (TS) und die dünnere Platte (IM) miteinander verklebt werden, mindestens eine anorganische Komponente enthält.

Die mit dem erfindungsgemäßen Verfahren hergestellten zumindest zweilagigen Platten zeichnen sich dadurch aus, dass die vorteilhaften Eigenschaften der einzelnen Ausgangsplatten miteinander kombiniert werden können, sodass zwei- oder mehrlagige Platten mit auf das jeweilige Anforderungsprofil maßgeschneiderten Materialeigenschaften bereitgestellt werden können.

Diese zwei- oder mehrlagigen Platten weisen neben einer guten Verarbeitbarkeit eine niedrige Wärmeleitfähigkeit sowie vorteilhafte Eigenschaften im Zusammenhang mit einer verringerten Brennbarkeit sowie dem Erfüllen von Brandtests auf.

Die erfindungsgemäßen zumindest zweilagigen Platten unterschreiten vorzugsweise bei dem sogenannten SBI (single-burner-item)-Test gemäß DIN EN 13823 (2015) die im Rahmen der Baustoffklassifizierung gemäß DIN EN 13501-1 (2010) genannten Grenzen hinsichtlich des Wertes "(FIGRA)" und der "Gesamten freigesetzten Wärme während 600 s (THR₆₀₀ₛ)", die für die Einstufung in Klasse B relevant sind.

Der Wert (FIGRA) ist nach DIN EN 13501-1 (2010) das Maximum des Quotienten aus der Wärmefreisetzungsrate der Probe und dem zugehörigen Zeitpunkt, wobei ein THR-Schellenwert von 0,2 MJ benutzt wird. Die erfindungsgemäßen Platten zeigen somit im Gegensatz zu einer reinen thermoplastischen Schaumstoffplatte im SBI-Test ein deutlich reduziertes Brandverhalten.

Vorzugsweise unterschreiten die erfindungsgemäßen zumindest zweilagigen Platten auch bei dem Brandtest gemäß EN ISO 11925-2 (2010) die im Rahmen der Baustoffklassifizierung gemäß DIN EN 13501-1 (2010) genannte Grenze hinsichtlich der Flammhöhe, die ebenfalls für die Einstufung in Klasse B relevant ist. Die zumindest zweilagigen Platten weisen damit bei dem Brandtest gemäß EN ISO 11925-2 (2010) vorzugsweise eine Flammhöhe von ≤ 150 mm auf.

Das verbesserte Flammverhalten ist dabei insbesondere auf den Klebstoff zurückzuführen, der mindestens eine anorganische Komponente enthält. Die erfindungsgemäßen Platten zeigen somit im Gegensatz zu zweilagigen Platten, die beispielsweise mittels Polyurethankleber verklebt werden, ein deutlich reduziertes Brandverhalten.

Der Klebstoff, der mindestens eine anorganische Komponente enthält, zeichnet sich weiterhin durch eine einfache Handhabung aus. Er muss nicht, wie etwa ein *hot-melt-*Kleber, vor der Verwendung erhitzt werden, sondern kann direkt bei Raumtemperatur auf die entsprechenden Oberflächen der Ausgangsplatten aufgebracht werden.

Demzufolge können durch die vorliegende Erfindung auf einfache Weise brandgeschützte zumindest zweilagige Platten bereitgestellt werden, die als Dämmmaterialien mit niedrigen Wärmeleitfähigkeiten eingesetzt werden können und die zudem über die von Standard- (thermoplastischen) Schaumstoffen bekannten Eigenschaften, wie mechanische Unempfindlichkeit, leichte Verarbeitbarkeit und/oder Verfügbarkeit in beliebigen Dicken verfügen.

Darüber hinaus führt das Zusammenfügen der einzelnen dünneren Ausgangsplatten (TS) und (IM) durch Verkleben zu stabilen zumindest zweilagigen Platten.

Im Rahmen der vorliegenden Erfindung wird unter den Begriffen "Thermoplast" oder "thermoplastische Schaumstoffplatte" Folgendes verstanden. Thermoplaste, auch Plastomere genannt, sind polymere Kunststoffe, die sich in einem bestimmten Temperaturbereich (thermoplastisch) verformen lassen. Dieser Vorgang ist prinzipiell reversibel, das heißt er kann durch Abkühlung und Wiedererwärmung bis in den schmelzflüssigen Zustand mehrfach wiederholt werden. Thermoplastische Schaumstoffplatten sind folglich Schaumstoffe in Plattenform, die über die vorgenannten Polymereigenschaften eines Thermoplastes verfügen. Eine thermoplastische Schaumstoffplatte ist überwiegend, also zu mindestens 50 Gew.-%, aus mindestens einem Thermoplast hergestellt (bezogen auf das Gesamtgewicht der jeweiligen Platten). Gegebenenfalls können noch weitere Materialien/Komponenten in der thermoplastischen Schaumstoffplatte enthalten sein, die selbst keine Thermoplasten sind. Vorzugsweise ist die thermoplastische Schaumstoffplatte vollständig oder nahezu vollständig (mindestens 95 Gew.-%) aus mindestens einem Thermoplast hergestellt.

Im Rahmen der vorliegenden Erfindung wird unter dem Begriff "Platte (IM), die aus einem anorganischen Isolationsmaterial hergestellt ist" Folgendes verstanden. Das entsprechende anorganische Isolationsmaterial ist plattenförmig angeordnet bzw. als Platte hergestellt. Eine solche dünnere Platte (IM) ist überwiegend, also zu mindestens 50 Gew.-%, aus mindestens einem anorganischen Isolationsmaterial hergestellt (bezogen auf das Gesamtgewicht der jeweiligen Platte). Gegebenenfalls können noch weitere Materialien/Komponenten in der entsprechenden dünneren Platte (IM) enthalten sein, die selbst kein anorganisches Isolationsmaterial sind. Vorzugsweise ist die dünnere Platte (IM) vollständig oder nahezu vollständig (mindestens 95 Gew.-%) aus mindestens einem anorganischen Isolationsmaterial hergestellt.

Im Rahmen der vorliegenden Erfindung wird unter dem Begriff "Klebstoff, der mindestens eine anorganische Komponente enthält" folgendes verstanden. Der Klebstoff kann sowohl genau eine anorganische Komponente als auch Mischungen aus zwei und mehreren anorganischen Komponenten enthalten. Beispiele für anorganische Komponenten sind anorganische Salze wie beispielsweise Kalziumoxid, Siliciumoxid oder Kalziumhydroxid.

Der Klebstoff kann gegebenenfalls noch weitere Materialien/Komponenten enthalten, die selbst keine anorganischen Komponenten sind. Beispiele für Materialien/Komponenten, die selbst keine anorganischen Komponenten sind, sind Wasser oder organische Komponenten. Beispiele für organische Komponenten sind organische Komponenten auf Polymerbasis wie beispielsweise organische Klebstoffe.

Diese können als Additive im Klebstoff enthalten sein. Vorzugsweise enthält der Klebstoff jedoch keine organischen Klebstoffe, besonders bevorzugt enthält er keine Polyurethan-Klebstoffe.

Nachfolgend werden das erfindungsgemäße Herstellungsverfahren der zumindest zweilagigen Platten sowie die erfindungsgemäßen zumindest zweilagigen Platten als solche näher definiert.

Die mit dem erfindungsgemäßen Verfahren hergestellte Platte ist zumindest zweilagig, sie kann also genau zwei Lagen aufweisen oder beispielsweise dreilagig sein. Wie vorstehend bereits aufgeführt, ergibt sich die Anzahl der Lagen der Platten als solche aus der Anzahl der dünneren Platten (TS) und (IM), die miteinander verklebt werden. Die dünneren Platten werden auch als Ausgangsplatten bezeichnet.

Im Falle einer zweilagigen Platte als solche werden also zwei dünnere Platten, eine erste dünnere thermoplastische Platte und eine zweite dünnere Platte, die aus einem anorganischen Isolationsmaterial hergestellt ist, miteinander verklebt.

Bei einer dreilagigen Platte als solche werden drei dünnere Platten miteinander verklebt.

Vorzugsweise ist die erfindungsgemäße Platte zweilagig.

Das Verkleben als solches (Durchführung) wird weiter unten im Text im Zusammenhang mit dem erfindungsgemäßen Herstellungsverfahren näher definiert.

Voraussetzung bei jeder zumindest zweilagigen Platte, die nach dem erfindungsgemäßen Verfahren hergestellt wird, ist, dass in der entsprechenden Anzahl an Lagen (also die konkrete Anzahl an dünneren Ausgangsplatten (IM) und (TS)) immer mindestens eine dünnere thermoplastische Schaumstoffplatte (TS) und mindestens eine dünnere Platte (IM) als Ausgangsplatten verwendet werden. Während die dünnere Ausgangsplatte (TS) zwingend thermoplastisch ist, ist die dünnere Platte (IM) hingegen aus einem anorganischen Isolationsmaterial hergestellt. Die Platte (IM) kann gegebenenfalls über thermoplastische Bestandteile in geringen Mengen verfügen, vorzugsweise ist die Platte (IM) jedoch weitgehend, insbesondere vollständig frei von thermoplastischen Bestandteilen. Im Gegensatz dazu, kann die dünnere Ausgangsplatte (TS) ebenfalls geringe Anteile an einem anorganischen Material aufweisen, vorzugsweise ist die dünnere Platte (TS) jedoch weitgehend, insbesondere vollständig frei von einem anorganischen Material.

In einer bevorzugten Ausführungsform der Erfindung wird eine dreilagige Platte hergestellt durch Verkleben von einer dünneren thermoplastischen Schaumstoffplatte (TS) und zwei dünneren Platten (IM), wobei jeweils eine dünnere Platte (IM) auf jeweils einer sich gegenüberliegenden Seite der dünneren thermoplastischen Schaumstoffplatte (TS) unter Erhalt der dreilagigen Platte aufgeklebt wird.

Die zum Verkleben verwendeten dünneren Ausgangsplatten (TS) und (IM) entsprechen hinsichtlich ihrer chemischen Zusammensetzung den im Rahmen der vorliegenden Erfindung hergestellten zumindest zweilagigen Platten als solchen. Bei dieser Betrachtungsweise werden jedoch die Klebstoffe, die auf die jeweiligen Oberflächen der dünneren Ausgangsplatten aufgebracht werden, nicht berücksichtigt. Die jeweils miteinander zu verklebenden dünneren Ausgangsplatten weisen vorzugsweise dieselben Dimensionen auf. Vorzugsweise erfolgt das Verkleben an den jeweils flächenmäßig größten Seiten der jeweiligen Ausgangsplatten.

Die Dimensionierung der miteinander zu verklebenden dünneren Platten (TS) und (IM) ist beliebig. Hinsichtlich ihrer Länge und Breite können sie Maße im Zentimeterbereich bis hin zu mehreren Metern aufweisen. Hinsichtlich ihrer dritten Dimension (Dicke) sind theoretisch ebenfalls beliebige Maße denkbar. Allerdings weist die mindestens eine dünnere thermoplastische Schaumstoffplatte (TS) vorzugsweise eine größere Dicke auf als die mindestens eine dünnere Platte (IM). In der Praxis weisen die dünneren Ausgangsplatten (TS) und (IM) eine Dicke im Bereich von 1 bis 400 mm auf.

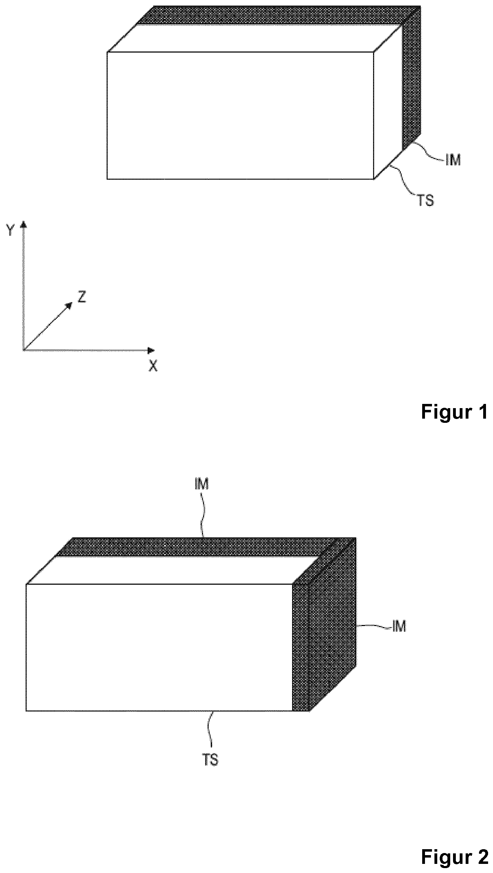

Bezogen auf ein rechtwinkliges Koordinatensystem wird erfindungsgemäß die Länge einer Ausgangsplatte bzw. einer zumindest zweilagigen Platte als solche auch als "X-Richtung" bezeichnet, die entsprechende Breite als "Y-Richtung" und die Dicke als "Z-Richtung". Die Dicke der zumindest zweilagigen Platte steigt mit zunehmender Anzahl von verbundenen Ausgangsplatten kontinuierlich an. In Figur 1 sind x-, y- und z-Richtung anhand einer zweilagigen Platte dargestellt.

Die vorstehend bzw. nachfolgend angegebenen Werte hinsichtlich der Dicke der dünneren Platten (TS) und (DS) beziehen sich auf die entsprechenden Werte einer Ausgangsplatte, die für sich genommen noch keinen Verklebungsschritt erfahren hat.

Die Dicke der im erfindungsgemäßen Verfahren hergestellten zumindest zweilagigen Platten ergibt sich aus der Gesamtdicke der insgesamt eingesetzten dünneren Platten (Ausgangsplatten).

Vorzugsweise weist die mindestens eine dünnere thermoplastische Schaumstoffplatte (TS) eine Länge (x-Richtung) von 500 bis 2800 mm, vorzugsweise von 1000 bis 1500 mm und eine Breite (y-Richtung) von 200 bis 1250 mm, vorzugsweise von 500 bis 900 mm, auf.

Vorzugsweise weist die dünnere Platte (IM) eine Länge (x-Richtung) von 500 bis 2800 mm, vorzugsweise von 1000 bis 1500 mm und eine Breite (y-Richtung) von 200 bis 1250 mm, vorzugsweise von 500 bis 900 mm, auf.

Vorzugsweise weist die dünnere thermoplastische Schaumstoffplatte (TS) eine Dicke (z-Richtung) von 80 bis 400 mm, bevorzugt von 90 bis 300 mm, mehr bevorzugt von 100 bis 200 mm, auf.

Vorzugsweise weist die mindestens eine dünnere Platte (IM) eine Dicke (z-Richtung) von 1 bis 40 mm, bevorzugt von 3 bis 30 mm, mehr bevorzugt von 5 bis 20 mm, auf.

Vorzugsweise ist die mindestens eine dünnere thermoplastische Schaumstoffplatte (TS) mindestens um den Faktor 2, bevorzugt mindestens um den Faktor 5, mehr bevorzugt mindestens um den Faktor 10, dicker als die mindestens eine dünnere Platte (IM).

Vorzugsweise ist die mindestens eine dünnere thermoplastische Schaumstoffplatte (TS) höchstens um den Faktor 50, bevorzugt höchstens um den Faktor 30, dicker als die mindestens eine dünnere Platte (IM).

Weiterhin ist es bevorzugt, dass jede dünnere thermoplastische Schaumstoffplatte (TS) und jede dünnere Platte (IM) identische Werte für die Länge (x-Richtung) und die Breite (y-Richtung) aufweisen.

Weiterhin ist es bevorzugt, dass die mindestens eine dünnere thermoplastische Schaumstoffplatte (TS) und die mindestens eine dünnere Platte (IM) über jeweils eine der beiden flächenmäßig größten Seiten (xy-Ebene) der entsprechenden Platte miteinander verklebt werden, besonders bevorzugt weisen die miteinander zu verklebenden Platten identische Länge- und Breitedimensionen auf.

Die dünneren thermoplastischen Schaumstoffplatten (TS) als solche sind dem Fachmann prinzipiell bekannt. Geeignete thermoplastische Schaumstoffplatten sind beispielsweise in Form von Blends in der WO 2009/047487 offenbart. Beispielsweise können Platten aus amorphen, kristallinen oder teilkristallinen thermoplastischen Schaumstoffen eingesetzt werden.

Vorzugsweise ist die dünnere thermoplastische Schaumstoffplatte (TS) ein Partikelschaumstoff oder ein Extrusionsschaumstoff auf Basis mindestens eines Polymers, ausgewählt aus der Gruppe, bestehend aus Polystyrol, Polystyrolcopolymeren, Polyethersulfon, Polysulfon, Polyethylenterephthalat, thermoplastischem Polyurethan, Polyolefinen, Polyolefincopolymeren und Acrylpolymeren, vorzugsweise ein Partikelschaumstoff oder Extrusionsschaumstoff auf Basis mindestens eines Polymers, ausgewählt aus der Gruppe, bestehend aus Polystyrol, Polystyrolcopolymeren, Polyethersulfon, Polysulfon, thermoplastischem Polyurethan und Polyethylenterephthalat, am meisten bevorzugt ein Partikelschaumstoff oder Extrusionsschaumstoff auf Basis mindestens eines Polymers, ausgewählt aus der Gruppe, bestehend aus Polystyrol, Polystyrolcopolymeren, Polyethersulfon und Polyethylenterephthalat.

Geeignete Polyolefine sind beispielsweise Polyethylen und/oder Polypropylen.

Polystyrolcopolymere werden auch als "aus Styrol hergestellte Copolymere" oder als "Styrolcopolymerisate" bezeichnet. Ist das in der dünneren thermoplastischen Schaumstoffplatte (TS) üblicherweise enthaltene Polymer ein Polystyrolcopolymer, bedeutet dies, dass zur Herstellung des Polymers, neben dem monomeren Styrol, mindestens ein weiteres Monomer (Comonomer) erforderlich ist. Als Comonomere zu Styrol eignen sich prinzipiell alle mit Styrol polymerisierbaren Monomere. Vorzugsweise sind mindestens 50 Gew.-% Styrol in dem Polystyrolcopolymer einpolymerisiert, bezogen auf das Gesamtgewicht des Polystyrolcopolymers.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureestern, Methacrylsäureestern, N-Vinylverbindungen, Maleinsäureanhydrid, Butadien, Divinylbenzol und Butandioldiacrylat. Acrylsäureester sowie Methacrylsäureester sind vorzugsweise erhältlich aus Alkoholen mit einem bis acht Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS).

Ist die dünnere thermoplastische Schaumstoffplatte (TS) ein Partikelschaumstoff, so ist der Partikelschaumstoff vorzugsweise Styropor oder Neopor, die kommerziell von der BASF SE erhältlich sind. In diesem ist das Polymer ein Polystyrol, ein Polystyrolcopolymer oder eine Mischung aus Polystyrol oder einem Polystyrolcopolymer mit mindestens einem weiteren Polymer. Mischungen aus Polystyrol oder einem Polystyrolcopolymer mit mindestens einem weiteren Polymer werden auch als "Blends" bezeichnet. Als mindestens ein weiteres Polymer eignen sich alle dem Fachmann bekannten Polymere, wie beispielsweise die vorstehend beschriebenen Polymere.

Am meisten bevorzugt ist die dünnere thermoplastische Schaumstoffplatte (TS) ein Partikelschaumstoff aus einem Polystyrol, der beispielsweise unter der Bezeichnung "Neopor" von der BASF SE kommerziell erhältlich ist.

Sofern die dünnere thermoplastische Schaumstoffplatte (TS) ein Extrusionsschaumstoff ist, wird vorzugsweise an denjenigen Seiten (Oberflächen), die mit einer anderen Ausgangsplatte verbunden werden sollen, die Schäumhaut entfernt. Gegebenenfalls kann dies auch an den sonstigen Seiten (Oberflächen) der entsprechenden Ausgangsplatte durchgeführt werden. Das Entfernen der Schäumhaut (die auch als "Extrusionshaut" bezeichnet wird) als solches ist dem Fachmann bekannt. Dies bedeutet, dass die entsprechende Ausgangsplatte an den zu verklebenden Oberflächen schäumhautfrei ist.

Vorzugsweise ist die dünnere thermoplastische Schaumstoffplatte (TS) zu mindestens 90 Gew.-%, bevorzugt zu mindestens 95 Gew.-%, besonders bevorzugt zu 98 Gew.-%, aus mindestens einem Thermoplast hergestellt (bezogen auf das Gesamtgewicht der dünneren thermoplastischen Schaumstoffplatte (TS)).

Weitere Komponenten, die in der dünneren thermoplastischen Schaumstoffplatte (TS) enthalten sein können, die also beispielsweise bei deren Herstellungsprozess in das Volumen der Platte integriert werden, können beispielsweise Flammschutzmittel, Nukleierungsmittel, Farbstoffe, IR-Absorber oder sonstige Additive sein. Die vorgenannten Komponenten sind allesamt dem Fachmann bekannt Sofern beim Herstellungsprozess der entsprechenden thermoplastischen Platte Treibmittel eingesetzt werden, beispielsweise im Rahmen eines Extrusionsverfahrens, werden diese Treibmittel bei der Bestimmung des vorgenannten Gesamtgewichts der dünneren thermoplastischen Schaumstoffplatte (TS) nicht mitberücksichtigt. Dies ist insbesondere dadurch begründet, dass Treibmittel mit der Zeit aus der entsprechenden Platte ausdiffundieren. Demzufolge werden bei der Bestimmung des Gesamtgewichts der dünneren thermoplastischen Schaumstoffplatte (TS) nur diejenigen Komponenten/Verbindungen mitberücksichtigt, die keine Gase sind und folglich dauerhaft in der entsprechenden dünneren Ausgangsplatte vorhanden sind und die nicht ausdiffundieren können.

Die dünnere thermoplastische Schaumstoffplatte (TS) kann prinzipiell beliebige Werte hinsichtlich des mittleren Zelldurchmessers (auch als "Zellgröße" oder "mittlere Zellgröße" bezeichnet) aufweisen. In der Praxis weisen thermoplastische Schaumstoffplatten einen mittleren Zelldurchmesser auf, der größer ist als 1 µm (entspricht 1 000 nm). Der mittlere Zelldurchmesser kann nach der Norm "ASTM D 3576" (Bestimmung der Zellgröße von harten Schaumstoffen; Ausgabe 2015), also nach dem Fachmann bekannten Methoden gemessen werden. Die spezifischen Werte des mittleren Zelldurchmessers in einer konkreten Platte können nach dem Fachmann bekannten Methoden eingestellt werden, beispielsweise durch die gewählten Druck- oder Temperaturwerte bei der Plattenherstellung und/oder die Art oder Menge des Treibmittels und/oder die Art oder Menge von Nukleierungsmittel, beispielsweise während des Extrusionsverfahrens.

Vorzugsweise weist die dünnere thermoplastische Schaumstoffplatte (TS) einen mittleren Zelldurchmesser ≥ 10 µm, vorzugsweise ≥ 50 µm und besonders bevorzugt ≥ 100 µm auf. Die Obergrenze des mittleren Zelldurchmessers der dünneren thermoplastischen Schaumstoffplatte (TS) beträgt in der Regel nicht mehr als 500 µm, vorzugsweise maximal 350 µm.

Die dünneren thermoplastischen Schaumstoffplatten (TS) können prinzipiell beliebige Dichten aufweisen. Vorzugsweise beträgt die Dichte der dünneren thermoplastischen Schaumstoffplatten (TS) 10 bis 100 g/l, mehr bevorzugt 10 bis 50 g/l.

Weiterhin ist es bevorzugt, dass die dünnere Schaumstoffplatte (TS) eine Wärmeleitfähigkeit λ ≤ 0,035 W/(mK), vorzugsweise ≤ 0,033 W/(mK) aufweist. Die Wärmeleitfähigkeit der dünneren Schaumstoffplatte (TS) wird nach EN 12667 oder EN 12939 bei einer Mitteltemperatur von 10 ± 0,3 °C bestimmt.

Die im erfindungsgemäßen Verfahren eingesetzte mindestens eine dünnere Platte (IM) als solche, die aus einem anorganischen Isolationsmaterial hergestellt ist, ist dem Fachmann ebenfalls bekannt.

Im Rahmen der vorliegenden Erfindung ist das anorganische Isolationsmaterial vorzugsweise ausgewählt aus der Gruppe bestehend aus Aerogelen, Xerogelen, Mineralfasern oder Bimsstein, mehr bevorzugt aus Mineralfasern oder Bimsstein, besonders bevorzugt aus Glaswolle, Steinwolle, Basaltfasern oder Bimsstein, ganz besonders bevorzugt aus Glaswolle oder Steinwolle.

Aerogele oder Xerogele sowie die entsprechenden Herstellungsverfahren sind dem Fachmann prinzipiell bekannt, siehe beispielsweise WO 2012/000917. Im Allgemeinen wird unter einem Xerogel ein solches Material verstanden, das durch ein Sol-Gel-Verfahren hergestellt wurde, wobei die flüssige Phase durch Trocknung unterhalb der kritischen Temperatur und oberhalb des kritischen Drucks der flüssigen Phase ("subkritische Bedingungen") aus dem Gel entfernt wurde. Im Gegensatz dazu spricht man im Allgemeinen von Aerogelen, wenn die Entfernung der flüssigen Phase aus dem Gel während des Sol-Gel-Prozesses unter "überkritischen Bedingungen" durchgeführt wurde.

Aerogele werden vorzugsweise nach dem Sol-Gel-Verfahren hergestellt und sind beispielsweise in EP-A 2 665 876, WO 2010/046074 oder EP-A 2 597 072 beschrieben. Das kommerziell von der BASF SE (Ludwigshafen, Deutschland) erhältliche Produkt "Slentex" ist ein Beispiel für ein Aerogel.

In einer bevorzugten Ausführungsform der Erfindung ist das Aerogel ein anorganisches Aerogel auf Basis von Metalloxiden, vorzugsweise auf Basis von mindestens einem Oxid von Silicium, Aluminium oder Titanium, insbesondere auf Basis von mindestens einem Oxid von Silicium (Silicat).

Mineralfasern sowie deren Herstellung sind dem Fachmann ebenfalls bekannt. Beispiele für Mineralfasern sind Asbest, Basaltfasern, Glaswolle oder Steinwolle.

Die mindestens eine dünnere Platte (IM) kann prinzipiell beliebige Dichten aufweisen. Vorzugsweise beträgt die Dichte der mindestens einen dünneren Platte (IM) 50 bis 500 g/l, mehr bevorzugt 80 bis 300 g/l.

Im Rahmen der vorliegenden Erfindung wird die zumindest zweilagige Platte durch Verkleben hergestellt, wobei der Klebstoff, mit dem die dünnere thermoplastische Schaumstoffplatte (TS) und die dünnere Platte (IM) miteinander verklebt werden, mindestens eine anorganische Komponente enthält.

Der im erfindungsgemäßen Verfahren eingesetzte Klebstoff, der mindestens eine anorganische Komponente enthält, ist dem Fachmann bekannt.

Der erfindungsgemäße Klebstoff enthält vorzugsweise mindestens 30 Gew.-%, mehr bevorzugt mindestens 40 Gew.-%, besonders bevorzugt mindestens 50 Gew.-% und insbesondere bevorzugt mindestens 60 Gew.-%, bezogen auf das Gesamtgewicht des Klebstoffs, mindestens einer anorganischen Komponente.

Weiterhin enthält er vorzugsweise höchstens 85 Gew.-%, mehr bevorzugt höchstens 80 Gew.-%, besonders bevorzugt höchstens 75 Gew.-% und insbesondere bevorzugt höchstens 70 Gew.-%, bezogen auf das Gesamtgewicht des Klebstoffs, mindestens einer anorganischen Komponente.

Im Rahmen der vorliegenden Erfindung ist die anorganische Komponente vorzugsweise ausgewählt aus der Gruppe bestehend aus Kalziumoxid, Siliciumoxid, Titanoxid, Aluminiumoxid, Eisenoxid, Magnesiumoxid, Kaliumoxid, Natriumoxid und Kalziumhydroxid, mehr bevorzugt aus der Gruppe bestehend aus Kalziumoxid, Siliciumoxid und Aluminiumoxid.

In einer bevorzugten Ausführungsform enthält der Klebstoff mindestens 30 Gew.-%, bevorzugt mindestens 40 Gew.-%, mehr bevorzugt mindestens 50 Gew.-%, bezogen auf das Gesamtgewicht des Klebstoffs, Kalziumoxid, Siliciumoxid und/oder Aluminiumoxid.

Die im Klebstoff enthaltene mindestens eine anorganische Komponente ist vorzugsweise mit Wasser gemischt.

Der Klebstoff enthält mindestens 15 Gew.-%, bevorzugt mindestens 20 Gew.-%, mehr bevorzugt mindestens 25 Gew.-%, besonders bevorzugt mindestens 30 Gew.-%, bezogen auf das Gesamtgewicht des Klebstoffs, Wasser.

Weiterhin enthält er vorzugsweise höchstens 70 Gew.-%, mehr bevorzugt höchstens 60 Gew.-%, besonders bevorzugt höchstens 50 Gew.-% und insbesondere bevorzugt höchstens 40 Gew.-%, bezogen auf das Gesamtgewicht des Klebstoffs, Wasser.

In einer weiteren bevorzugten Ausführungsform enthält der Klebstoff mindestens 60 Gew.-%, bevorzugt mindestens 75 Gew.-%, mehr bevorzugt mindestens 90 Gew.-%, besonders bevorzugt mindestens 95 Gew.-%, bezogen auf das Gesamtgewicht des Klebstoffs, mindestens einer anorganischen Komponente und Wasser.

Der Klebstoff kann gegebenenfalls neben der mindestens einen anorganischen Komponente und Wasser noch weitere Komponenten/Materialien enthalten, die selbst keine anorganischen Komponenten oder Wasser sind, beispielsweise organische Klebstoffe.

Der Klebstoff enthält vorzugsweise höchstens 10 Gew.-%, mehr bevorzugt höchstens 5 Gew.-% und besonders bevorzugt höchstens 1 Gew.-%, bezogen auf das Gesamtgewicht des Klebstoffs, eines organischen Klebstoffs.

In einer besonders bevorzugten Ausführungsform enthält der Klebstoff keinen organischen Klebstoff, insbesondere enthält der Klebstoff keinen Polyurethan-Klebstoff.

Der Klebstoff wird im erfindungsgemäßen Verfahren auf mindestens einer Oberfläche der dünneren thermoplastischen Schaumstoffplatte (TS) und/oder der dünneren Platte (IM) aufgebracht, wobei der Klebstoff mindestens eine anorganische Komponente gemäß den vorstehenden Definitionen enthält.

Vorzugsweise wird der Klebstoff pro zu verklebendem Plattenpaar auf nur eine zu verklebende Oberfläche der dünneren Ausgangsplatten aufgetragen. Verfahren zum Auftragen eines Klebstoffs sind dem Fachmann bekannt, beispielsweise kann der Klebstoff großflächig auf die entsprechende Oberfläche der dünneren thermoplastischen Schaumstoffplatte (TS) und/oder der dünneren Platte (IM) aufgetragen werden. Das Auftragen des Klebstoffs kann nach den üblichen Verfahren erfolgen, zum Beispiel durch Pinseln, Sprühen, Walzen, Rakeln oder Drucken. Die aufgebrachte Klebstoffmenge liegt in der Regel zwischen 10 g/m² bis 400 g/m² (fest), bevorzugt sind 20 g/m² bis 250 g/m². Besonders bevorzugt wird der Klebstoff in Mengen von < 400 g/m², vorzugsweise von < 250 g/m² (bezogen auf die zu verklebende Oberfläche einer Platte pro Plattenpaar), aufgetragen. Die Mindestmengen betragen dabei vorzugsweise 50 g/m², insbesondere 70 g/m². Vorzugsweise werden die vorgenannten Klebstoffmengen nur auf eine zu verklebende Oberfläche der dünneren Ausgangsplatten (pro Plattenpaar) aufgebracht, während auf die zweite zu verklebende Oberfläche kein Klebstoff aufgebracht wird. Im Rahmen der vorliegenden Erfindung werden vorzugsweise außer den vorstehend aufgeführten Klebstoffen keine weiteren Klebstoffe verwendet.

Das Aufbringen des Klebstoffs erfolgt vorzugsweise gleichförmig in eine Richtung der jeweiligen Plattenoberfläche.

In einer weiteren bevorzugten Ausführungsform der vorliegenden Erfindung wird der Klebstoff strukturiert, vorzugsweise punktförmig, linienförmig oder gitterförmig, insbesondere gitterförmig, auf mindestens eine Oberfläche der dünneren thermoplastischen Schaumstoffplatte (TS) und/oder der dünneren Platte (IM) aufgetragen.

Diese Ausführungsform der vorliegenden Erfindung, die auch als strukturiertes Verkleben bezeichnet wird, wird nachfolgend näher erläutert. Das strukturierte Verkleben mit dem Klebstoff kann durch beliebige Strukturen beziehungsweise Strukturformen erfolgen. Vorzugsweise sind auf der Oberfläche der dünneren Ausgangsplatte, auf die der Klebstoff strukturiert aufgebracht ist, 20 bis 80 %, mehr bevorzugt 40 bis 80 %, insbesondere 50 bis 75 %, der jeweiligen Plattenoberfläche mit Klebstoff versehen.

Die Strukturen können im Rahmen der vorliegenden Erfindung auch als Muster oder Strukturierungsmuster bezeichnet werden. Eine Struktur ist aus mindestens einer Strukturform, die auch als Struktureinheit bezeichnet werden kann, aufgebaut. Unter einer Struktureinheit (Strukturform) wird im Rahmen der vorliegenden Erfindung die kleinste Einheit in einem Muster (Struktur) verstanden. Eine solche Struktureinheit kann beispielsweise ein Karo, eine Raute, ein Rechteck, ein Kreuz, ein Quadrat oder eine Linie sein. Gegebenenfalls können solche Struktureinheiten sich abwechseln beziehungsweise miteinander kombiniert werden. So sind Muster denkbar, die aus mehreren verschiedenen Struktureinheiten aufgebaut sind, beispielsweise aus mehreren Linien von unterschiedlicher Stärke (Breite) und/oder Tiefe, die sich beispielsweise mit Rauten oder Quadraten abwechseln. So können auch in einem Gitter unterschiedliche Struktureinheiten enthalten sein, beispielsweise Quadrate von unterschiedlicher Größe, die abwechselnd angeordnet sind. Solche Strukturen werden auch als Raster bezeichnet. Ein Raster kann beispielsweise auch aus mehreren Kreuzen gebildet werden. Eine solche Struktur stellt im Rahmen der vorliegenden Erfindung eine Ausführungsform eines Gitters dar.

Die Abstände zwischen den einzelnen Struktureinheiten auf der jeweiligen Oberfläche der dünneren thermoplastischen Schaumstoffplatte (TS) und/oder der dünneren Platte (IM), die durch das Auftragen des Klebstoffs so erzeugt wurden, können beliebige Werte (Größen) annehmen. Vorzugsweise beträgt der Abstand zwischen den einzelnen Struktureinheiten des strukturiert aufgebrachten Klebstoffs 5 bis 50 mm (Durchschnittswert über das gesamte Muster), insbesondere beträgt der Abstand 7,5 bis 20 mm. Die Breite einer Struktureinheit (Struktur), beispielsweise der Durchmesser eines Punktes (bei einer punktförmigen Struktur) oder die Breite einer Linie (bei einer linien- oder gitterförmigen Struktur) kann beliebig sein, vorzugsweise ist sie im Bereich von 1 bis 100 mm, mehr bevorzugt 5 bis 50 mm, insbesondere 10 bis 25 mm.

Sofern bei dieser Ausführungsform der vorliegenden Erfindung der Klebstoff pro Plattenpaar auf beide miteinander zu verklebenden Oberflächen der dünneren Ausgangsplatten aufgebracht werden soll, ist es bevorzugt, dass die beiden zu verklebenden Oberflächen identische oder zu mindestens 80 % übereinstimmende Strukturierungsmuster (Muster oder Struktur) aufweisen. Vorzugsweise weisen die beiden zu verklebenden Oberflächen identische Strukturierungsmuster auf. Weiterhin ist es bevorzugt, dass die zu verklebenden Oberflächen vor dem Verkleben so übereinandergelegt werden, dass möglichst viele der mit dem Klebstoff erzeugten Strukturen auf beiden zu verklebenden Oberflächen miteinander zur Deckung kommen. Besonders bevorzugt werden bei dieser Ausgestaltung dieser Ausführungsform zwei Oberflächen mit identischen Strukturierungsmuster miteinander verklebt, wobei die zu verklebenden Oberflächen vor dem Verkleben so übereinandergelegt werden, dass die mit dem Klebstoff erzeugten Strukturen auf beiden zu verklebenden Oberflächen vollständig miteinander zur Deckung kommen.

Durch das Verkleben bildet sich zwischen den zu verklebenden Oberflächen (der Ausgangsplatten), also zwischen den beiden dünneren Platten (TS) und (IM), vorzugsweise eine Klebenaht aus. Die Klebenaht kann in Abhängigkeit des verwendeten Klebeverfahrens prinzipiell eine beliebige Dicke annehmen, vorzugsweise ist die Dicke der Klebenaht jedoch nicht allzu groß, also nicht größer als 500 µm.

In einer bevorzugten Ausführungsform der vorliegenden Erfindung wird auf mindestens einer Oberfläche der zumindest zweilagigen Platte mindestens eine weitere dünnere Platte (IM) durch Verkleben aufgebracht, wobei die mindestens eine weitere dünnere Platte (IM) senkrecht zur Klebenaht aufgebracht wird.

In einer weiteren bevorzugten Ausführungsform der vorliegenden Erfindung wird auf zwei, drei oder vier Oberflächen der zumindest zweilagigen Platte jeweils eine weitere dünnere Platte (IM) durch Verkleben aufgebracht, wobei die jeweils eine weitere dünnere Platte (IM) senkrecht zur Klebenaht aufgebracht wird.

Unter der "Klebenaht" wird hier die Klebenaht zwischen den beiden dünneren Ausgangsplatten (TS) und (IM) verstanden.

In Figur 2 ist eine zweilagige Platte aus einer dünneren thermoplastischen Platte (TS) und einer dünneren Platte (IM) dargestellt, auf die senkrecht zur Klebenaht eine weitere dünnere Platte (IM) durch Verkleben aufgebracht ist. Die Klebenaht ist in Figur 2 nicht dargestellt.

Das erfindungsgemäße Verfahren zeichnet sich weiterhin dadurch aus, dass die zumindest zweilagige Platte
i) einen Wert FIGRA von ≤ 120 W/s, bevorzugt von ≤ 20 W/s, mehr bevorzugt von ≤ 10 W/s, aufweist, und/oder
ii) während 600 s eine gesamte Wärme THR₆₀₀ₛ von ≤ 7,5 MJ, bevorzugt von ≤ 2,5 MJ, mehr bevorzugt von ≤ 1,0 MJ, freisetzt, und/oder
iii) bei dem Brandtest gemäß EN ISO 11925-2 (2010) eine Flammhöhe von ≤ 150 mm aufweist.

Bei dem Brandtest gemäß EN ISO 11925-2 (2010) wird die Flammhöhe vorzugweise an der Klebenaht der um 90° gedrehten zumindest zweilagigen Platte bestimmt.

Ein weiterer Gegenstand der vorliegenden Erfindung ist eine zumindest zweilagige Platte, erhältlich nach dem vorstehend beschriebenen Verfahren.

Dabei ist es bevorzugt, dass die erfindungsgemäße zumindest zweilagige Platte
i) einen Wert FIGRA von ≤ 120 W/s, bevorzugt von ≤ 20 W/s, mehr bevorzugt von ≤ 10 W/s, aufweist, und/oder
ii) während 600 s eine gesamte Wärme THR₆₀₀ₛ von ≤ 7,5 MJ, bevorzugt von ≤ 2,5 MJ, mehr bevorzugt von ≤ 1,0 MJ, freisetzt, und/oder
iii) bei dem Brandtest gemäß EN ISO 11925-2 (2010) eine Flammhöhe von ≤ 150 mm aufweist.

Ein weiterer Gegenstand der vorliegenden Erfindung ist die Verwendung einer solchen zumindest zweilagigen Platte als Brandschutz für die Außenfassade eines Bauwerkes.

Ein weiterer Gegenstand der vorliegenden Erfindung ist die Außenwand eines Bauwerks, auf die eine erfindungsgemäße zumindest zweilagige Platte aufgebracht ist, vorzugsweise ist die erfindungsgemäße zumindest zweilagige Platte so auf die Außenwand aufgebracht, dass eine flächenmäßig größte Seite (xy-Ebene) einer dünneren thermoplastischen Ausgangsplatte (TS) mit der Außenwand des Bauwerks verbunden ist.

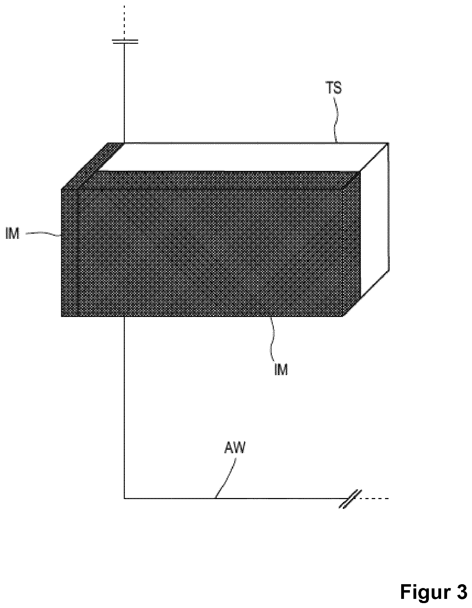

In Figur 3 ist eine Außenwand (AW) eines Bauwerks dargestellt, auf die eine erfindungsgemäße zweilagige Platte aufgebracht ist, wobei die erfindungsgemäße zweilagige Platte so auf die Außenwand (AW) aufgebracht ist, dass eine flächenmäßig größte Seite (xy-Ebene) der dünneren thermoplastischen Ausgangsplatte (TS) mit der Außenwand (AW) des Bauwerks verbunden ist. Des Weiteren ist auf die erfindungsgemäße zweilagige Platte eine weitere dünnere Platte (IM) senkrecht zur Klebenaht aufgebracht. Die Klebenaht ist in Figur 3 nicht dargestellt.

Nachfolgend wird die vorliegende Erfindung anhand von Beispielen näher erläutert.

### Beispiele

In den nachfolgenden Beispielen werden die zumindest zweilagigen Schaumstoffplatten durch Verkleben hergestellt. Die verwendeten Klebstoffe und deren genaue Zusammensetzung sind in Tabelle 1 aufgeführt.

Die zu verklebenden Ausgangsplatten, also mindestens eine dünnere thermoplastische Schaumstoffplatte (TS) und mindestens eine dünnere Platte (IM) haben jeweils die folgenden Dimensionen:

| | |
|---|---|
| Länge (x-Richtung): | 1.000 mm |
| Breite (y-Richtung): | 500 mm |
| Dicke (z-Richtung): | Die jeweiligen Werte sind in den nachfolgenden Tabellen 1, 2 und 3 für die einzelnen Beispiele angegeben. |

Das Verkleben wird so durchgeführt, dass erfindungsgemäß in der zumindest zweilagigen Platte nach dem Klebevorgang jeweils eine flächenmäßig gleichgroße Seite, die von der dünneren thermoplastischen Schaumstoffplatte (TS) bzw. von der dünneren Platte (IM) stammt, miteinander verklebt sind. Die jeweiligen Seiten der entsprechenden Ausgangsplatten haben genau die gleichen Dimensionen, es handelt sich somit um eine der beiden flächenmäßig größten Seiten der jeweiligen Ausgangsplatten, die durch die x-Richtung und die y-Richtung definiert werden.

Der zum Verkleben verwendete Klebstoff wird jeweils mittels eines Spachtels oder eines Pinsels auf eine Seite der dünneren thermoplastischen Schaumstoffplatte (TS) aufgetragen. Die Menge des Klebstoffs beträgt dabei 200 g/m³. Danach wird auf der mit Klebstoff versehenen Seite der dünneren thermoplastischen Schaumstoffplatte (TS) eine dünnere Platte (IM) aufgelegt. Die zu verklebenden dünneren Platten (IM) und (TS) werden anschließend in einer Presse mit einem Druck von 0,1 bar (0,01 N/mm²) verpresst.

Bei den in Tabelle 1 aufgeführten Beispielen 1 bis 4 und A bis F wird der vorgenannte Klebevorgang einfach durchgeführt, wobei dadurch eine genau zweilagige Platte erhalten wird. Im Gegensatz dazu wird bei den in Tabelle 2 aufgeführten Beispielen 5 bis 8 und G bis L der vorgenannte Klebevorgang zweimal durchgeführt, wobei dadurch eine genau dreilagige Platte erhalten wird. In anderen Worten ausgedrückt, wird bei den in Tabelle 2 aufgeführten Beispielen eine zweite dünnere Platte (IM) auf die nach dem ersten Klebevorgang erhaltene zumindest zweilagige Platte aufgeklebt.

### Herstellung der zweilagigen Platten (siehe Tabelle 1)

Es werden folgende dünnere Ausgangsplatten eingesetzt:
a) Platten (IM) aus einem anorganischen Isolationsmaterial und
b) thermoplastische Schaumstoffplatten (TS)

Sofern als thermoplastische Ausgangsplatte b) Styrodur eingesetzt wird, wird bei diesen Ausgangsplatten vor dem Durchführen des Verklebens an den zu verklebenden Flächen die Schäumhaut durch Fräsen entfernt.

### Erfindungsgemäße Beispiele

### Beispiele 1, 2, 5 und 6 bzw. A bis C sowie G bis I

a) Platte aus Steinwolle (Isover Akustic EP 5 Dämmplatte; Dicke 15 mm)
b) Neopor:
   Dichte 15 g/l; Platten geschäumt aus Neopor 2200 (BASF SE; λ = 32 mW/(mK); Dicke 150 mm)

### Beispiel 3, 4, 7 und 8 bzw. D bis F sowie J bis L

a) Platte aus Steinwolle (Isover Akustic EP 5 Dämmplatte; Dicke 15 mm)
b) Styrodur:
   Dichte 32 g/l; (BASF SE; λ = 33 mW/(mK); Dicke 130 mm)

Bei den Beispielen 1 bis 4 handelt es sich um erfindungsgemäße Beispiele, bei den Beispielen A bis F handelt es sich um Vergleichsbeispiele.

In der Spalte mit der Zusammensetzung des Klebstoffs sind in Klammer auch die Gewichtsprozente der einzelnen Komponenten, bezogen auf das Gesamtgewicht des Klebstoffs, angegeben.

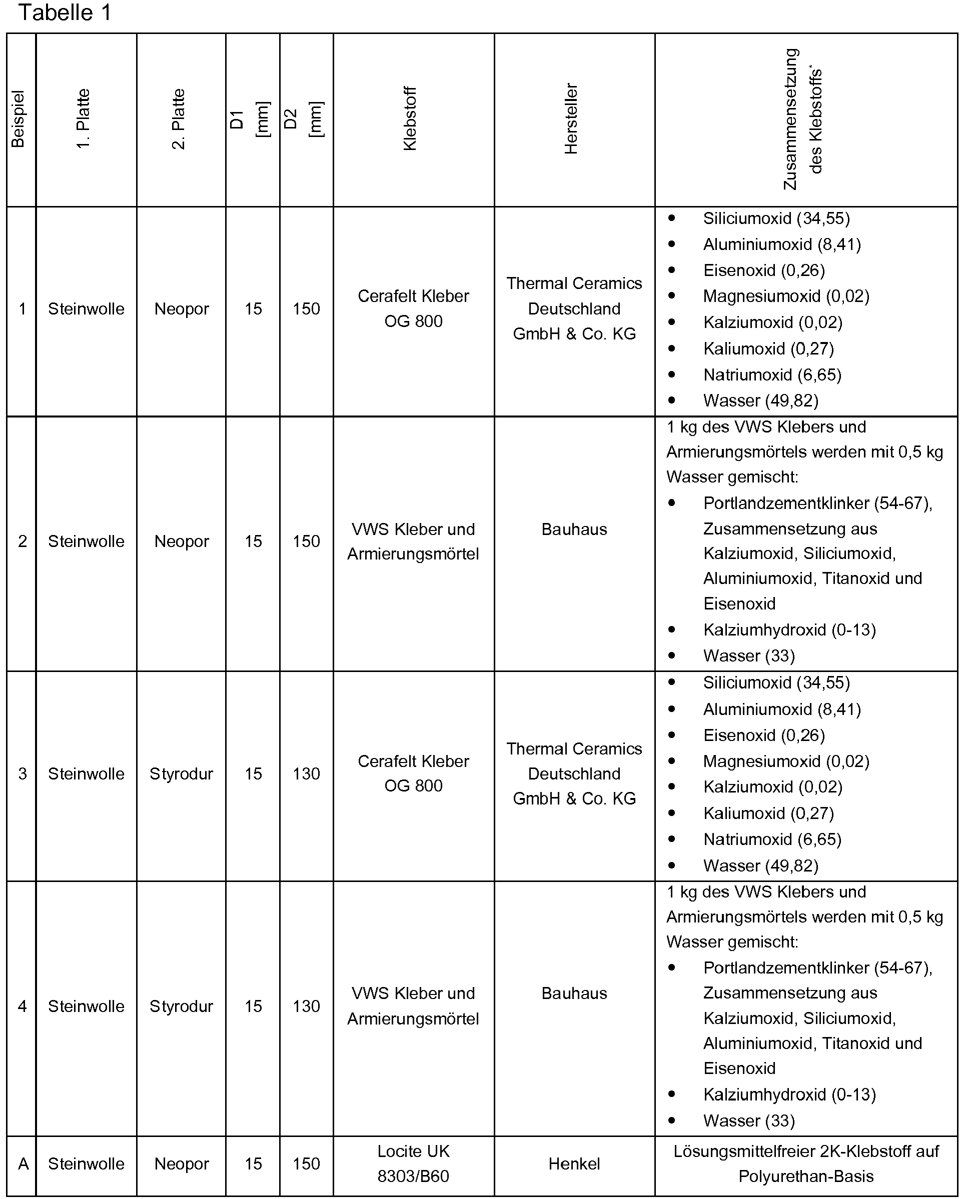

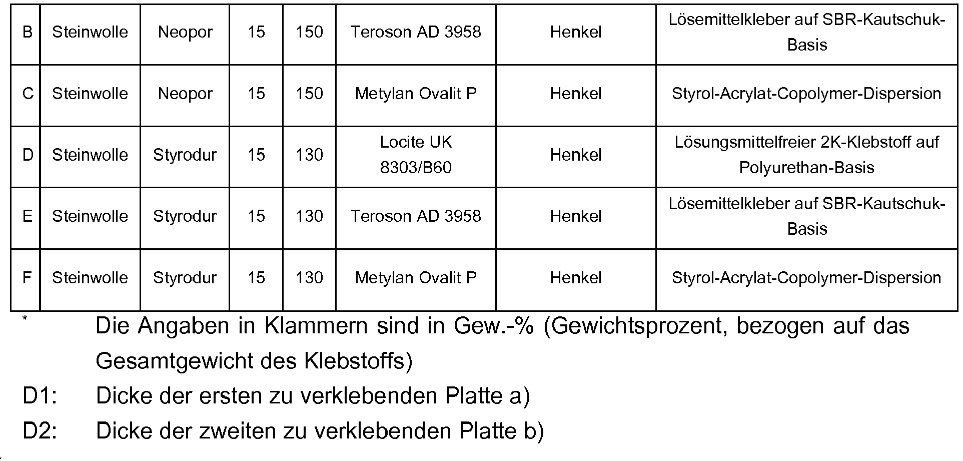

### Herstellung der dreilagigen Platten (siehe Tabelle 2)

Durch zweifaches Ausführen des Klebevorgangs gemäß Tabelle 1 werden folgende Kombinationen von dreilagigen Platten hergestellt.

Bei den Beispielen 5 bis 8 handelt es sich um erfindungsgemäße Beispiele, bei den Beispielen G bis L handelt es sich um Vergleichsbeispiele.

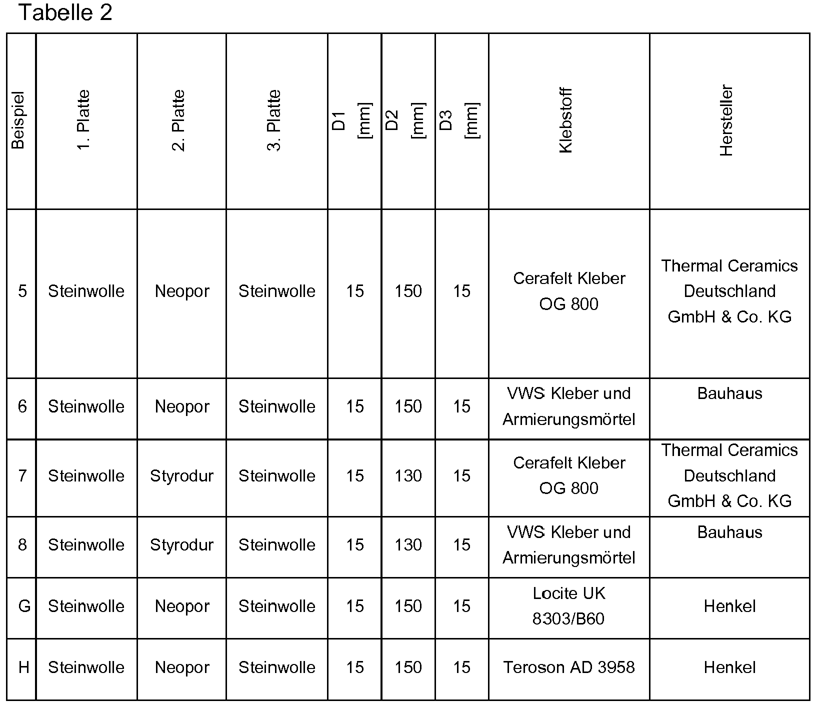

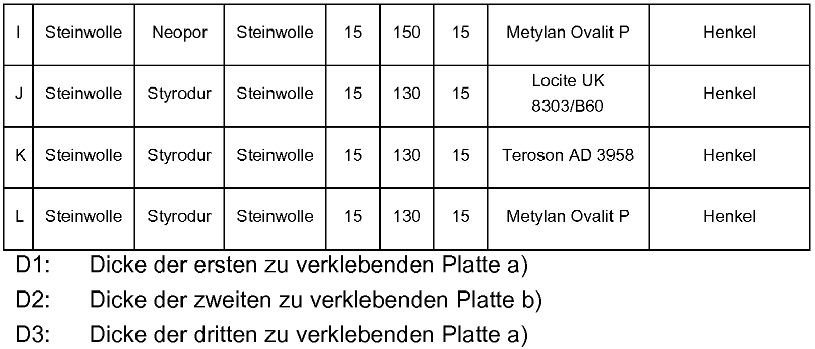

### Brandprüfung (siehe Tabelle 3)

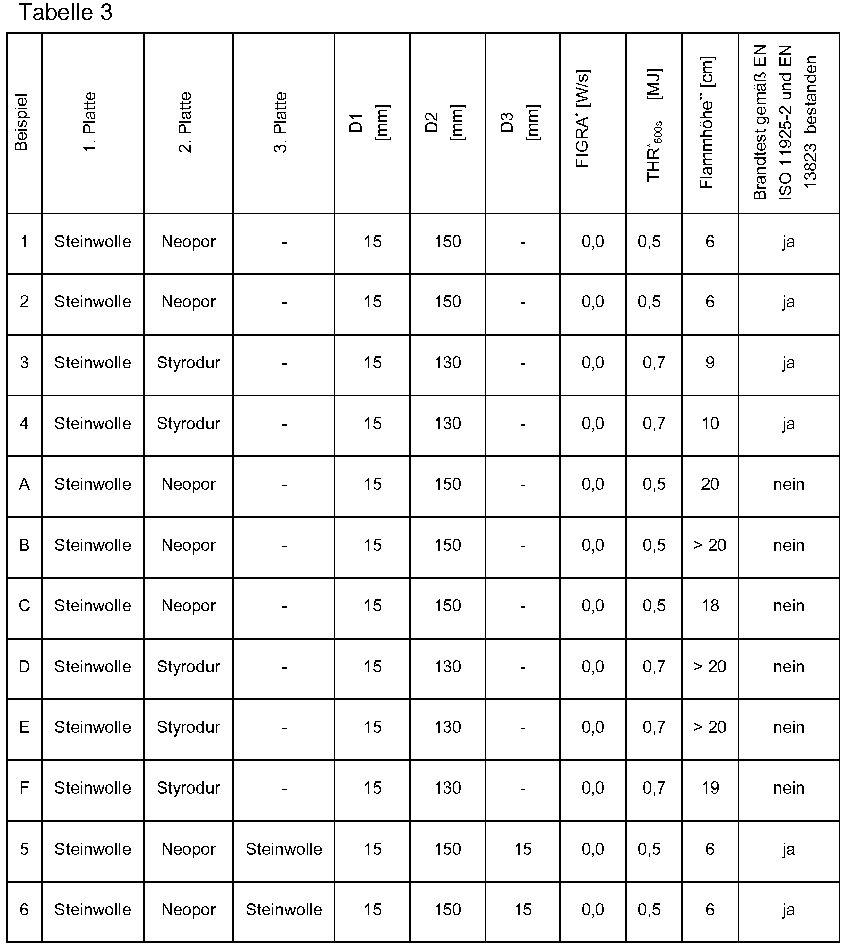

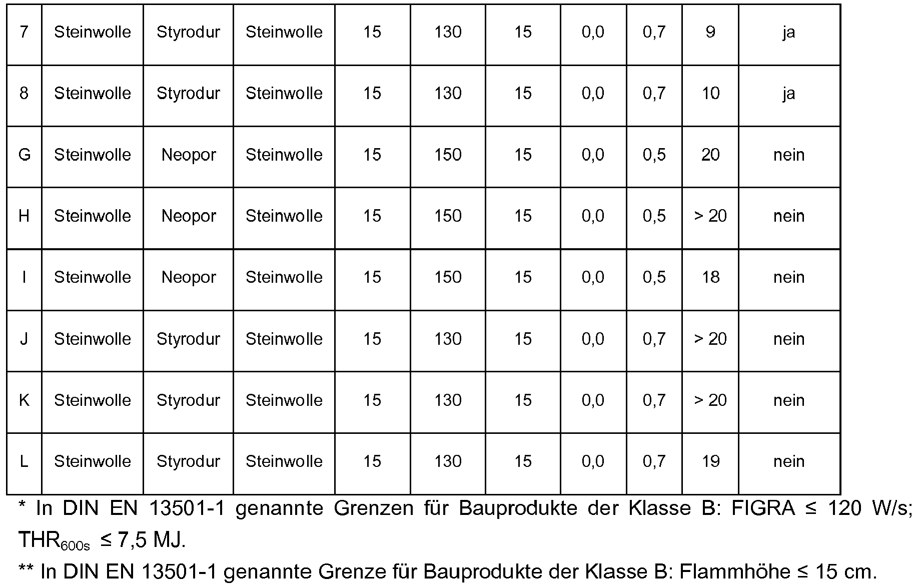

Die Platten 1 bis 8 sowie A bis L werden in Brandtests geprüft. Bei den Brandtests handelt es sich um den Brandtest gemäß EN ISO 11925-2 (2010) und um den SBI (single-burner-item) Test gemäß DIN EN 13823 (2015).

Die erfindungsgemäßen Platten unterschreiten bei dem Brandtest gemäß EN ISO 11925-2 (2010) die im Rahmen der Baustoffklassifizierung gemäß DIN EN 13501-1 (2010) genannte Grenze hinsichtlich der Flammhöhe, die für Einstufung in Klasse B relevant ist. Außerdem unterschreiten sie bei dem sogenannten SBI (single-burner-item)-Test gemäß DIN EN 13823 (2015) die im Rahmen der Baustoffklassifizierung gemäß DIN EN 13501-1 (2010) genannten Grenzen hinsichtlich des Wertes "(FIGRA)" und der "Gesamten freigesetzten Wärme während 600 s (THR₆₀₀ₛ)", die für Einstufung in Klasse B relevant sind.

Der Wert FIGRA ist nach DIN EN 13501-1 (2010) das Maximum des Quotienten aus der Wärmefreisetzungsrate der Probe und dem zugehörigen Zeitpunkt, wobei ein THR-Schellenwert von 0,2 MJ benutzt wird. Die erfindungsgemäßen Platten zeigen somit im Gegensatz zu den Platten gemäß den Beispielen A bis L in den Brandtests ein deutlich reduziertes Brandverhalten.

## Patentansprüche

1. Verfahren zur Herstellung einer zumindest zweilagigen Platte durch Verkleben von mindestens einer dünneren thermoplastischen Schaumstoffplatte (TS) und mindestens einer dünneren Platte (IM), wobei die mindestens eine dünnere Platte (IM) aus einem anorganischen Isolationsmaterial hergestellt ist und wobei der Klebstoff, mit dem die dünnere thermoplastische Schaumstoffplatte (TS) und die dünnere Platte (IM) miteinander verklebt werden, mindestens eine anorganische Komponente enthält.

2. Verfahren gemäß Anspruch 1, **dadurch gekennzeichnet, dass**
i) die mindestens eine anorganische Komponente ausgewählt ist aus der Gruppe bestehend aus Kalziumoxid, Siliciumoxid, Titanoxid, Aluminiumoxid, Eisenoxid, Magnesiumoxid, Natriumoxid, Kaliumoxid und Kalziumhydroxid, und/oder
ii) der Klebstoff mindestens 30 Gew.-%, bevorzugt mindestens 40 Gew.-%, mehr bevorzugt mindestens 50 Gew.-%, besonders bevorzugt mindestens 60 Gew.-%, bezogen auf das Gesamtgewicht des Klebstoffs, mindestens einer anorganischen Komponente enthält, und/oder
iii) der Klebstoff mindestens 30 Gew.-%, bevorzugt mindestens 40 Gew.-%, mehr bevorzugt mindestens 50 Gew.-%, bezogen auf das Gesamtgewicht des Klebstoffs, Kalziumoxid, Siliciumoxid und/oder Aluminiumoxid enthält, und/oder
iv) der Klebstoff mindestens 15 Gew.-%, bevorzugt mindestens 20 Gew.-%, mehr bevorzugt mindestens 25 Gew.-%, besonders bevorzugt mindestens 30 Gew.-%, bezogen auf das Gesamtgewicht des Klebstoffs, Wasser enthält.

3. Verfahren gemäß Anspruch 1 oder 2, **dadurch gekennzeichnet, dass** der Klebstoff strukturiert, vorzugsweise punktförmig, linienförmig oder gitterförmig, insbesondere gitterförmig, auf mindestens eine Oberfläche der dünneren thermoplastischen Schaumstoffplatte (TS) und/oder der dünneren Platte (IM) aufgetragen wird.

4. Verfahren gemäß einem der Ansprüche 1 bis 3, **dadurch gekennzeichnet, dass**
i) die mindestens eine dünnere thermoplastische Schaumstoffplatte (TS) mindestens um den Faktor 2, bevorzugt mindestens um den Faktor 5, mehr bevorzugt mindestens um den Faktor 10, dicker ist als die mindestens eine dünnere Platte (IM), und/oder
ii) die mindestens eine dünnere thermoplastische Schaumstoffplatte (TS) höchstens um den Faktor 50, bevorzugt höchstens um den Faktor 30, dicker ist als die mindestens eine dünnere Platte (IM), und/oder
iii) die mindestens eine dünnere Platte (IM) eine Dicke (z-Richtung) von 1 bis 40 mm, bevorzugt von 3 bis 30 mm, mehr bevorzugt von 5 bis 20 mm, aufweist, und/oder
iv) die mindestens eine dünnere thermoplastische Schaumstoffplatte (TS) eine Dicke (z-Richtung) von 80 bis 400 mm, bevorzugt von 90 bis 300 mm, mehr bevorzugt von 100 bis 200 mm, aufweist.

5. Verfahren gemäß einem der Ansprüche 1 bis 4, **dadurch gekennzeichnet, dass** das anorganische Isolationsmaterial ausgewählt ist aus der Gruppe bestehend aus Aerogelen, Xerogelen, Mineralfasern oder Bimsstein, bevorzugt aus Mineralfasern oder Bimsstein, mehr bevorzugt aus Glaswolle, Steinwolle, Basaltfasern oder Bimsstein, insbesondere bevorzugt aus Glaswolle oder Steinwolle.

6. Verfahren gemäß einem der Ansprüche 1 bis 5, **dadurch gekennzeichnet, dass** die mindestens eine dünnere thermoplastische Schaumstoffplatte (TS) ein Partikelschaumstoff oder ein Extrusionsschaumstoff ist auf Basis mindestens eines Polymers, ausgewählt aus der Gruppe bestehend aus Polystyrol, Polystyrolcopolymeren, Polyethersulfon, Polysulfon, Polyethylenterephthalat, thermoplastischem Polyurethan, Polyolefinen, Polyolefincopolymeren und Acrylpolymeren, vorzugsweise ein Partikelschaumstoff oder Extrusionsschaumstoff auf Basis mindestens eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Partikelschaumstoff oder Extrusionsschaumstoff auf Basis mindestens eines Polymers, ausgewählt aus der Gruppe bestehend aus Polystyrol, Polystyrolcopolymeren, Polyethersulfon und Polyethylenterephthalat.

7. Verfahren gemäß einem der Ansprüche 1 bis 6, **dadurch gekennzeichnet, dass**
i) die mindestens eine dünnere thermoplastische Schaumstoffplatte (TS) eine Länge (x-Richtung) von 500 bis 2800 mm, vorzugsweise von 1000 bis 1500 mm und eine Breite (y-Richtung) von 200 bis 1250 mm, vorzugsweise von 500 bis 900 mm, aufweist, und/oder
ii) die mindestens eine dünnere Platte (IM) eine Länge (x-Richtung) von 500 bis 2800 mm, vorzugsweise von 1000 bis 1500 mm und eine Breite (y-Richtung) von 200 bis 1250 mm, vorzugsweise von 500 bis 900 mm, aufweist, und/oder
iii) jede dünnere thermoplastische Schaumstoffplatte (TS) und jede dünnere Platte (IM) identische Werte für die Länge (x-Richtung) und die Breite (y-Richtung) aufweisen, und/oder
iv) die mindestens eine dünnere thermoplastische Schaumstoffplatte (TS) und die mindestens eine dünnere Platte (IM) über jeweils eine der beiden flächenmäßig größten Seiten (xy-Ebene) der entsprechenden Platte miteinander verklebt werden, besonders bevorzugt weisen die miteinander zu verbindenden Platten identische Länge- und Breitedimensionen auf.

8. Verfahren gemäß einem der Ansprüche 1 bis 7, **dadurch gekennzeichnet, dass**
i) die mindestens eine dünnere Platte (IM) eine Dichte von 50 bis 500 g/l, bevorzugt von 80 bis 300 g/l, aufweist, und/oder
ii) die mindestens eine dünnere thermoplastische Schaumstoffplatte (TS) eine Dichte von 10 bis 100 g/l, bevorzugt von 10 bis 50 g/l, aufweist.

9. Verfahren gemäß einem der Ansprüche 1 bis 8, **dadurch gekennzeichnet, dass** eine dreilagige Platte hergestellt wird durch Verkleben von einer dünneren thermoplastischen Schaumstoffplatte (TS) und zwei dünneren Platten (IM), wobei jeweils eine dünnere Platten (IM) auf jeweils einer sich gegenüberliegenden Seite der dünneren thermoplastischen Schaumstoffplatte (TS) unter Erhalt der dreilagigen Platte, aufgeklebt wird.

10. Verfahren gemäß einem der Ansprüche 1 bis 9, **dadurch gekennzeichnet, dass** auf mindestens einer Oberfläche der zumindest zweilagigen Platte mindestens eine weitere dünnere Platte (IM) durch Verkleben aufgebracht wird, wobei die mindestens eine weitere dünnere Platte (IM) senkrecht zur Klebenaht aufgebracht wird.

11. Verfahren gemäß Anspruch 10, **dadurch gekennzeichnet, dass** auf zwei, drei oder vier Oberflächen der zumindest zweilagigen Platte jeweils eine weitere dünnere Platte (IM) durch Verkleben aufgebracht wird, wobei die jeweils eine weitere dünnere Platte (IM) senkrecht zur Klebenaht aufgebracht wird.

12. Verfahren gemäß einem der Ansprüche 1 bis 11, **dadurch gekennzeichnet, dass** die zumindest zweilagige Platte
i) einen Wert FIGRA von ≤ 120 W/s, bevorzugt von ≤ 20 W/s, mehr bevorzugt von ≤ 10 W/s, aufweist, und/oder
ii) während 600 s eine gesamte Wärme THR₆₀₀ₛ von ≤ 7,5 MJ, bevorzugt von ≤ 2,5 MJ, mehr bevorzugt von ≤ 1 MJ, freisetzt, und/oder
iii) bei dem Brandtest gemäß EN ISO 11925-2 (2010) eine Flammhöhe von ≤ 150 mm aufweist.

13. Zumindest zweilagige Platte, erhältlich nach einem Verfahren gemäß einem der Ansprüche 1 bis 12.

14. Verwendung einer zumindest zweilagigen Platte gemäß Anspruch 13 als Brandschutz für die Außenfassade eines Bauwerkes.

15. Außenwand (AW) eines Bauwerks, auf die eine zumindest zweilagige Platte gemäß Anspruch 13 aufgebracht ist, vorzugsweise ist die zumindest zweilagige Platte so auf die Außenwand (AW) aufgebracht, dass eine flächenmäßig größte Seite (xy-Ebene) einer dünneren thermoplastischen Ausgangsplatte (TS) mit der Außenwand (AW) des Bauwerks verbunden ist.
